Europäisches Patentamt

European Patent Office

Office européen des brevets

(19)

(11) Numéro de publication : **0 098 850 B1**

(12) **FASCICULE DE BREVET EUROPÉEN**

(45) Date de publication du fascicule du brevet :
05.03.86

(51) Int. Cl.4 : **A 01 N   1/02, A 61 D   7/02**

(21) Numéro de dépôt : 83900348.0

(22) Date de dépôt : **14.01.83**

(86) Numéro de dépôt international :
PCT/FR 83/00010

(87) Numéro de publication internationale :
WO/8302386 (21.07.83 Gazette 83/17)

(54) **PAILLETTE POUR LA CONSERVATION PAR CONGELATION D'EMBRYONS DE MAMMIFERES ET SON APPLICATION EN TRANSPLANTATION EMBRYONNAIRE.**

(30) Priorité : 15.01.82 FR 8200645
01.07.82 FR 8211603

(43) Date de publication de la demande :
25.01.84 Bulletin 84/04

(45) Mention de la délivrance du brevet :
05.03.86 Bulletin 86/10

(84) Etats contractants désignés :
AT BE CH DE GB LI LU NL SE

(56) Documents cités :
DE-B- 1 761 571
FR-A- 1 472 139
FR-A- 2 254 639

(73) Titulaire : INSTITUT NATIONAL DE LA RECHERCHE AGRONOMIQUE (INRA)
149, rue de Grenelle
F-75341 Paris Cedex 07 (FR)

(72) Inventeur : RENARD, Jean-Paul
72, rue Jullien
F-92170 Vanves (FR)
Inventeur : OZIL, Jean-Pierre
4, rue des Fontaines du Temple
F-75003 Paris (FR)
Inventeur : HEYMAN, Yvan
14 Clos de Verrières
F-91370 Verrières Le Buisson (FR)

(74) Mandataire : Phélip, Bruno et al
c/o Cabinet Harlé & Phélip 21, rue de la Rochefoucauld
F-75009 Paris (FR)

EP 0 098 850 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# 0 098 850

## Description

La présente invention concerne la conservation par congélation d'embryons de mammifères. De tels embryons trouvent application dans la transplantation embryonnaire.

On connaît dans l'art antérieur des petits tubes en matière plastique, dénommés paillettes, contenant des spermatozoïdes dans un liquide approprié.

Par ailleurs, on sait que, pour congeler un embryon, il faut utiliser un cryoprotecteur. Cependant le retrait de ce cryoprotecteur après décongélation est nécessaire pour assurer une viabilité ultérieure de l'embryon. On a proposé la congélation d'un embryon bovin dans une paillette d'une structure différente de celle de la présente invention, dans laquelle il n'est pas prévu la dilution du cryoprotecteur après décongélation.

La présente invention fournit une paillette d'une structure nouvelle, qui permet de retirer le cryoprotecteur sans manipuler l'embryon.

Dans la paillette selon la présente invention, l'embryon est conditionné avant la congélation et ladite paillette est utilisée en l'état au moment de la transplantation.

La présente invention propose une paillette scellée avec laquelle il n'est plus nécessaire d'effectuer de nombreuses manipulations de l'embryon, comme cela était le cas avec la technique antérieure. Ainsi, plus précisément, un seul conditionnement est maintenant nécessaire, savoir celui utilisé pour la mise en place dans l'utérus de la femelle réceptrice.

Grâce à la paillette selon l'invention, on peut utiliser l'embryon congelé, à la ferme, sans aucune manipulation à l'échelle microscopique. On peut stocker dans un récipient cryogénique transportable les embryons immédiatement disponibles. Toutes les techniques selon l'art antérieur nécessitaient auparavant l'intervention obligatoire d'un biologiste pour, après décongélation, manipuler l'embryon sous loupe binoculaire.

La présente invention a pour objet une paillette pour la conservation par congélation d'embryons de mammifères dans un milieu de conservation capable d'être congelé et décongelé et comprenant une substance cryoprotectrice (ou cryoprotecteur) qui pénètre à l'intérieur des cellules de l'embryon, ladite paillette étant caractérisée en ce qu'elle est scellée à ses extrémités jusqu'au moment de l'utilisation dans le mammifère et en ce que l'embryon est entouré respectivement :

(A) d'une part, successivement en direction d'une extrémité, (a) d'un mélange gazeux, (b) d'un milieu de culture, et (c) d'un premier bouchon extrême de scellement,

(B) et d'autre part, successivement en direction de l'autre extrémité, (d) d'une bulle de gaz de volume réduit et calibré, (e) d'une solution d'au moins une substance miscible à l'eau, peu ou pas toxique à la température ambiante vis-à-vis de l'embryon, qui ne pénètre pas à l'intérieur des cellules de l'embryon mais qui assure à l'extérieur de celui-ci une pression osmotique suffisante pour permettre une diffusion progressive du cryoprotecteur à l'extérieur des cellules, la disposition étant telle que, à la décongélation, l'embryon dans son milieu de conservation est mis directement en contact avec ladite solution, (f) d'une autre bulle de gaz et (g) d'un deuxième bouchon extrême de scellement.

La présente invention concerne aussi une paillette munie d'un jonc d'identification pour la conservation par congélation d'embryons de mammifères.

Il existe à l'heure actuelle un besoin d'identification d'un embryon congelé dans une paillette telle que celle décrite dans la présente invention.

Les paillettes de l'invention avant utilisation sont conservées dans de l'azote liquide. Elles portent généralement sur leur corps diverses informations nécessaires à l'identification comme les références de l'organisme ayant congelé les embryons, la date de congélation, la race et les références de la donneuse.

Etant donné que ces indications sont portées directement sur le corps de la paillette, un opérateur doit pour l'identification sortir pendant quelques instants la paillette de l'azote liquide afin de lire lesdites indications.

L'embryon qui est généralement congelé dans un volume de 10 à 40 $\mu$l se réchauffe très rapidement dès qu'on le sort de l'azote liquide. Il est bien connu que la vitesse de réchauffement entre $-196\,°C$ et $-60\,°C$ est sensiblement de l'ordre de $360\,°C/min$.

La lecture effectuée directement sur la paillette est donc une source de réchauffement non contrôlée qui favorise la recristallisation du milieu congelé.

Une telle recristallisation est d'autant plus marquée quand les cellules contiennent une certaine quantité de glace intracellulaire (FARRANT, HEATHER and WALTER, 1977 — Effects of interactions between cooling and rewarming conditions on survival of cells. In : « The freezing of Mammalian embryos », Ciba Foundation Symposium, 52, Elsevier, Excerpta Medica, North Holland). Or, c'est précisément le cas avec le type de congélation actuellement utilisé pour les embryons.

Il existe donc un problème concernant l'identification.

Il existe en outre un problème concernant le calibrage de la bulle de gaz qui est située entre la fraction contenant le cryoprotecteur et par conséquent l'embryon et la fraction qui, après décongélation, assure la dilution du cryoprotecteur.

La présente invention apporte une solution à ces problèmes en proposant une paillette pourvue d'un bouchon assurant tant une identification précise de l'embryon placé dans ladite paillette qu'une possibilité de calibrage de la bulle de gaz sus-mentionnée, tout en permettant un montage plus aisé de la paillette.

Selon la présente invention, il est prévu une paillette pour la conservation par congélation d'embryons de mammifères dans un milieu de conservation capable d'être congelé et décongelé et comprenant une substance cryoprotectrice (ou cryoprotecteur) qui pénètre à l'intérieur des cellules de l'embryon, ladite paillette étant scellée à ses deux extrémités juqu'au moment de l'utilisation dans le mammifère, l'embryon dans le milieu de conservation par congélation étant entouré respectivement : (A) d'une part successivement en direction d'une extrémité (a) d'un mélange gazeux, (b) d'un milieu de culture et (c) d'un premier bouchon extrême de scellement, et (c) d'un premier bouchon extrême de scellement, et (B) d'autre part successivement en direction de l'autre extrémité, (d) d'une bulle de gaz de volume réduit et calibré, (e) d'une solution d'au moins une substance miscible à l'eau, peu ou pas toxique à la température ambiante vis-à-vis de l'embryon qui ne pénètre pas à l'intérieur des cellules de l'embryon et qui assure à l'extérieur de celui-ci une pression osmotique suffisante pour permettre une diffusion progressive du cryoprotecteur à l'extérieur des cellules, la disposition étant telle que, à la décongélation, l'embryon dans son milieu de conservation est mis directement en contact avec la solution, (f) d'une autre bulle de gaz et (g) d'un deuxième bouchon extrême de scellement, paillette dans laquelle le deuxième bouchon extrême de scellement est un jonc en matière synthétique dont le corps est plus large que celui de ladite paillette et dont l'extrémité dudit jonc, provoquant l'éclatement de la bulle qui, lors de la décongélation, s'élève le long de la fraction du milieu assurant la dilution du cryoprotecteur, est emmanchée à force par au moins un méplat dans l'une des extrémités de la paillette après son remplissage à raison d'une longueur qui est choisie à volonté pour calibrer avec précision ladite bulle.

La présente invention concerne également les caractéristiques ci-après, considérées isolément ou selon toutes leurs combinaisons techniquement possibles :

— le mélange gazeux (a) est choisi parmi l'air, l'azote, des mélanges gazeux binaires ou ternaires ;

— le mélange gazeux (a) est constitué d'azote, d'oxygène et de gaz carbonique, notamment à raison de 90 % d'azote, de 5 % d'oxygène et de 5 % de dioxyde de carbone ;

— le milieu de culture (b) est un milieu de culture in vitro à tampon carbonate ou phosphate, par exemple un tampon carbonate comprenant essentiellement du glucose, des sels minéraux et des acides aminés, ou un milieu à tampon phosphate de type PBS ;

— le cryoprotecteur est le glycérol, le diméthylsulfoxyde ou le propanediol ;

— la bulle de gaz (d) placée entre l'embryon et la solution (e) est formée par l'air, l'azote ou des mélanges gazeux binaires ou ternaires ;

— la solution (e) contient du sucrose et un tampon salin (phosphate ou carbonate) ;

— la solution (e) contient de la polyvinylpyrrolidone et un tampon salin (phosphate ou carbonate) ;

— la normalité du tampon salin de la solution (e) est fonction de la molarité de la substance qu'elle contient, la règle étant que plus la molarité de la substance augmente, plus la normalité du tampon diminue ;

— la bulle de gaz (f) placée entre la solution (e) et le deuxième bouchon (g) est formée par l'air, l'azote ou des mélanges gazeux binaires ou ternaires ;

— la paillette est congelée horizontalement ;

— le rapport en volume des éléments constitutifs pour un volume global d'une paillette de 500 µl se situe dans la gamme suivante :

| | |
|---|---|
| embryon | 40 µl |
| mélange gazeux (a) | 50 µl |
| milieu de culture (b) | 150 µl |
| bulle de gaz (d) placée entre l'embryon et la solution (e) | 20 µl |
| solution (e) | 200 µl |
| bulle de gaz (f) placée entre la solution et le deuxième bouchon (g) | 40 µl |

— l'extrémité du jonc assurant l'éclatement de la bulle présente une forme de calotte sphérique ;

— l'extrémité du jonc assurant l'éclatement de la bulle présente une forme de tronc de cône ;

— l'extrémité du jonc assurant l'éclatement de la bulle présente une forme de cône ;

— la forme en tronc de cône ou de calotte sphérique de l'extrémité du jonc est surmontée d'une courte pointe ;

— le corps du jonc comporte des symboles nécessaires à l'identification de la paillette ;

— le jonc est en matière plastique injectée ;

— le jonc est en polychlorure de vinyle ;

— l'emmanchement à force du jonc est renforcé en soumettant la zone de jonction à une opération de soudage.

L'invention sera encore illustrée sans être aucunement limitée en référence aux dessins annexés sur lesquels :

Figure 1 représente la structure d'une paillette selon la présente invention avant la congélation,

Figure 2 illustre la même paillette que celle de la figure 1 lors de la décongélation et de la dilution du cryoprotecteur avant l'application de la paillette en transplantation embryonnaire,

Figure 3   illustre la structure d'une paillette munie d'un jonc d'identification selon la présente invention avant la congélation,

Figure 4   est un détail de l'extrémité d'un jonc en forme de calotte sphérique,

Figure 5   est un détail de l'extrémité d'un jonc en forme de tronc de cône,

Figure 6   est un détail de l'extrémité d'un jonc en forme de cône.

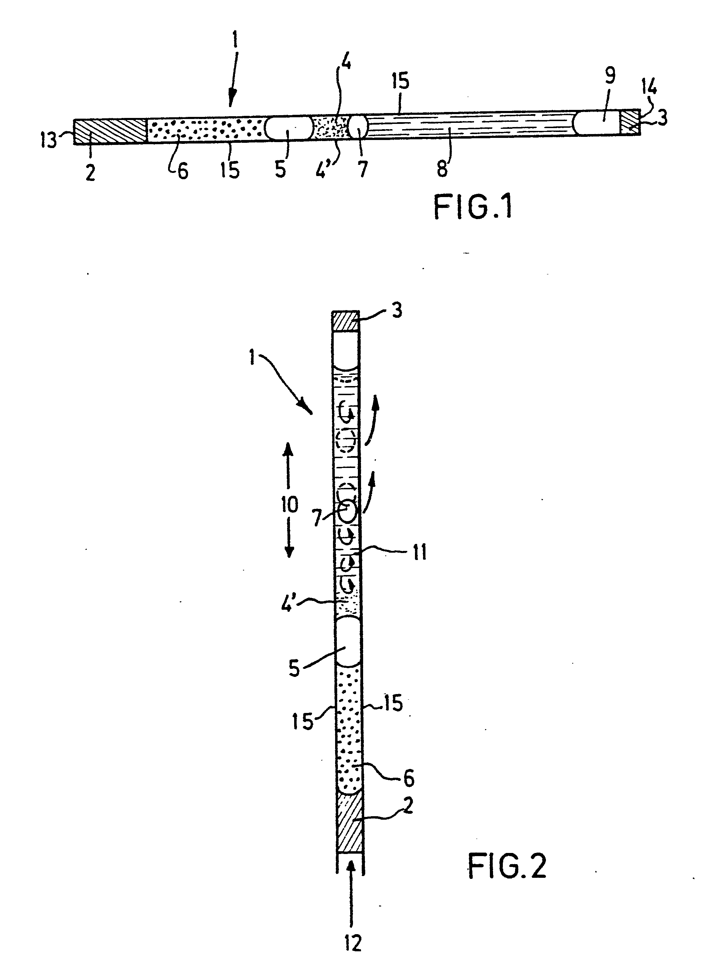

Sur la Figure 1, la paillette selon la présente invention est désignée dans son ensemble par 1. Elle est obturée à ses deux extrémités 13, 14 par un bouchon, les deux bouchons étant symbolisés respectivement par 2 et 3. Le premier bouchon 2 est un bouchon classique constitué de coton imbibé d'alcool polyvinylique. Un tel bouchon a été décrit dans le brevet FR 1.472.139. Le deuxième bouchon 3 peut être un bouchon identique à celui du bouchon 2, toutefois cela n'est pas nécessaire et il peut s'agir d'un simple bouchon d'alcool polyvinylique. Une paillette 1 d'une contenance de 500 µl présente une dimension de 13 cm pour un diamètre de 2,7 cm. L'embryon 4' se trouve dans le milieu de conservation par congélation. Celui-ci peut être tout milieu connu à cet effet. Il s'agit d'un milieu tamponné et additionné d'un cryoprotecteux 4 constitué, par exemple, de glycérol, de diméthylsulfoxyde ou de propanediol. Pour avoir plus de renseignements au sujet d'un tel milieu de conservation par congélation, l'homme de l'art pourra se référer à l'ouvrage : The Freezing of Mammalian Embryos Ciba Foundation Symposium 52 Elsevier North Holland, 1977 et à la publication Renaud et al. 1981 : Teriogenology, 15,113. A titre d'exemple, la concentration du cryoprotecteur (glycérol) 4 est d'environ 1 à 1,5 M. Pour une paillette 1 de 500 µl, le volume de l'embryon 4' dans le milieu de conservation par congélation représente 40 µl, celui-ci est entouré respectivement du côté tourné vers le bouchon 2 par 50 µl d'un mélange gazeux 5. Le mélange gazeux 5 peut être de l'air, de l'azote ou il peut comprendre des mélanges binaires ou ternaires. A titre d'exemple, le mélange gazeux 5 peut être constitué d'azote, d'oxygène et de dioxyde de carbone notamment à raison de 90 % d'azote, de 5 % d'oxygène et de 5 % de dioxyde de carbone. Entre le mélange gazeux 5 dont le volume représente, comme indiqué ci-dessus, sensiblement 50 µl et le bouchon 2 se trouve de culture 6. Le milieu de culture 6 est tout milieu approprié à la culture in vitro. Un exemple spécifique d'un tel milieu est un milieu tampon carbonate mis sur le marché par la société API FRANCE sous la dénomination « Milieu $B_2$ INRA MENEZO » et qui comprend essentiellement du glucose, des sels minéraux, des acides aminés. Un autre milieu 6 utilisable est celui disponible sous la dénomination générique PBS qui est un milieu tampon-phosphate ; un milieu PBS est notamment décrit par Whittingham dans « Journal of Reproduction and Fertility Supplement » 14 : 7-21 — 1971. Le milieu de culture in vitro 6 permet à la fois la viabilité de l'embryon 4' et la reprise normale de l'activité métabolique de celui-ci après décongélation. Sur le côté tourné vers le bouchon 3, l'embryon 4' dans le milieu de conservation par congélation renfermant le cryoprotecteur 4, est entouré par une bulle de gaz 7 d'un volume de 20 µl puis d'une solution 8 d'au moins une substance miscible à l'eau, peu ou pas toxique à la température ambiante vis-à-vis de l'embryon, qui ne pénètre pas à l'intérieur des cellules de l'embryon 4' mais qui assure à l'extérieur de l'embryon une pression osmotique suffisante pour permettre une diffusion progressive du cryoprotecteur 4 à l'extérieur des cellules ; cette solution étant désignée par 8 et, dans l'exemple choisi, occupe un volume de 200 µl. Enfin, une autre bulle de gaz 9, de volume de 40 µl, sépare la solution 8 du bouchon 3.

Les deux bulles de gaz 7 et 9 peuvent être constituées d'air, d'azote ou comprendre des mélanges de gaz binaires ou ternaires. La substance préférée pour la solution 8 est le sucrose. La solution 8 contient par exemple du sucrose et un tampon (phosphate ou carbonate) dont la normalité est choisie en fonction de la molarité du sucrose. Plus la molarité du sucrose augmente, plus la normalité du tampon diminue. Une combinaison qui a donné de bons résultats est constituée de sucrose 0,25 M pour un tampon de1 N. On peut remplacer le sucrose par de la polyvinylpyrrolidone, les conditions ci-dessus indiquées étant les mêmes.

La solution 8 est une fraction permettant le retrait partiel du cryoprotecteur 4 à l'extérieur des cellules de l'embryon 4'. Il est bien certain qu'une fraction minime de cryoprotecteur 4 restera de toute façon. La disposition dans la paillette 1 selon la présente invention est telle que, à la décongélation, l'embryon 4' dans son milieu de conservation est mis directement en contact avec la solution 8.

La bulle de gaz 7 est une fraction qui disparait au cours du réchauffement et qui permet la jonction de la solution 8 et du cryoprotecteur 4, tandis que le mélange gazeux 5 a pour effet de maintenir séparé jusqu'au transfert in utero le mélange de cryoprotecteur et de solution désigné par 11 et le milieu de culture 6.

La solution 8 ne pénètre pas dans les cellules embryonnaires mais permet en élevant la pression osmotique du milieu, de limiter notamment les chocs osmotiques sur les membranes cellulaires lors de la diffusion passive du cryoprotecteur 4 à l'extérieur des cellules de l'embryon 4'.

Les différentes fractions selon la structure ci-dessus sont placées par simple aspiration à l'aide d'une seringue de 1 ml dans la paillette 1 selon la présente invention. La paillette 1 est scellée à ses deux extrémités 13, 14 à l'aide des deux bouchons 2 et 3 et l'ensemble tel qu'illustré sur la figure 1 est ensuite congelé horizontalement.

La figure 2 illustre la décongélation et la silution du cryoprotecteur 4 qui dans l'exemple choisi est du glycérol 1,5 M. Lors de la décongélation, la paillette 1 est disposée verticalement dans un bain-marie à une température sensiblement de 37 °C désigné sur la figure 2 par 10.

La solution 8, moins concentrée que la solution de cryoprotecteur 4, commence à fondre la première à partir des parois 15 de la paillette 1 ; ainsi, à la température de décongélation, la solution 8 dont la concentration est inférieure à celle du milieu de conservation par congélation, commence à fondre la première, ce qui permet à la bulle de gaz 7, dès le début du changement de température accompagnant la décongélation, de s'élever à l'intérieur de la paillette 1 ; les dimensions de ladite bulle de gaz 7 sont définies de sorte que cette ascension se fasse progressivement. Le volume du mélange gazeux 5 qui est de plus grosse dimension que la bulle de gaz 7, reste pratiquement inchangé et maintient la séparation entre le milieu de conservation et le milieu de culture 6. On obtient ainsi dès la décongélation un mélange sucrose-glycérol 11. Le rapport des volumes de 1 à 5 glycérol : sucrose permet la diffusion progressive du glycérol. En retournant la paillette 1, une fois dans chaque sens pendant 5 à 7 minutes, on permet à l'embryon 4' de circuler tout le long de la colonne de liquide ce qui contribue à une diffusion homogène du cryoprotecteur 4.

La paillette 1 tenue verticalement, est coupée à son extrémité supérieure, puis montée dans un pistolet de transplantation 12. Une partie du milieu de dilution 11, constitué de glycérol et de sucrose dans le présent exemple, est expulsée avant mise en place de l'embryon 4'. Le mélange avec le milieu de culture 6 est ainsi assuré au cours du dépôt de l'embryon 4' dans l'utérus de la receveuse. Sur la figure 2 les mêmes symboles de référence désignent des parties identiques à celles de la figure 1.

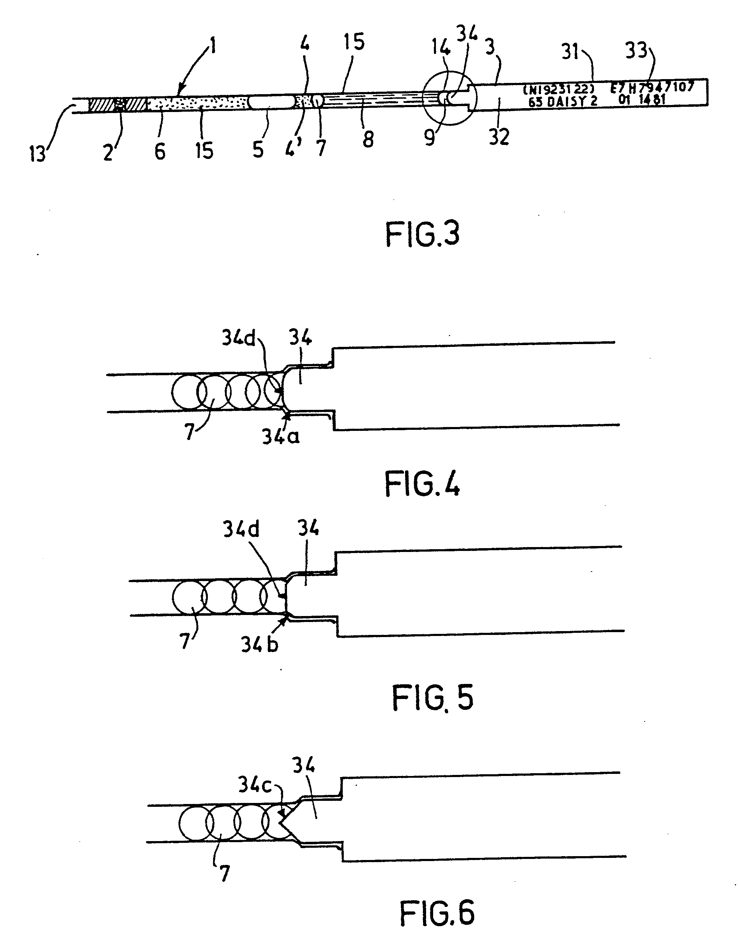

Sur les figures 3 à 6, la paillette est désignée dans son ensemble par 1 et ses parois par 15. Elle est obturée à une de ses extrémités 13 par un bouchon 2, qui est par exemple un bouchon d'alcool polyvinylique. L'embryon 4' se trouve dans un cryoprotecteur 4 et est entouré respectivement par un mélange gazeux 5 et une bulle de gaz 7. Entre le mélange gazeux 5 et le bouchon 2 se trouve le milieu de culture 6. Une solution 8 d'au moins une substance miscible à l'eau, peu ou pas toxique à la température ambiante, vis-à-vis de l'embryon, qui ne pénètre pas à l'intérieur des cellules de l'embryon 4' mais qui assure à l'extérieur de l'embryon une pression osmotique suffisante pour permettre une diffusion progressive du cryoprotecteur 4 à l'extérieur des cellules, est prévue entre la bulle de gaz 7 et une autre bulle de gaz 9 qui sépare ladite solution 8 du bouchon 3.

Le bouchon 3 qui est prévu à l'extrémité 14 de la paillette 1 est un jonc 31, en matière plastique dont le corps 32 est plus large que celui de la paillette 1. Ce jonc 31 est serti ou emmanché à force à une de ses extrémités 34 pourvue d'un méplat dans l'extrémité 14 de la paillette 1. L'extrémité 34 du jonc 31 en forme de calotte sphérique 34a, de tronc de cône 34b ou de cône 34c muni ou non d'une fine pointe 34d facilite après la décongélation l'éclatement de la bulle 7 lorsqu'elle arrive au contact du jonc 31, ce qui évite lors du retournement de la paillette 1 un mouvement de retour de la bulle 7 à l'intérieur de la paillette 1. Un tel mouvement peut perturber le déplacement de l'embryon 4' le long de la colonne constituée par le mélange des fractions 4 et 8. Le jonc 31 est emmanché après le remplissage de la paillette 1 à raison d'une longueur qui est choisie à volonté pour calibrer avec précision la bulle 7. Grâce à un effet de piston dû à l'emmanchement réglable du jonc 31, la bulle 7 peut être calibrée avec une très grande précision. Le jonc 31 comporte des symboles nécessaires à l'identification de la paillette 1 ; il est donc possible, selon la présente invention, tout en maintenant la possibilité de porter une identification directement sur la paillette 1, d'inscrire les symboles sur le jonc de matière plastique 31 qui possède une certaine inertie thermique et qui est serti dans l'extrémité 14 de la paillette 1. Pour la lecture, seule la sortie du jonc de matière plastique 31 hors de l'azote liquide est nécessaire, la paillette proprement dite 1 étant laissée dans l'azote liquide. Le recours à un code de couleurs corps 32 du jonc 31 — extrémité 14 permet une première identification pour des lots de paillettes stockées dans le récipient d'azote liquide. Pour que la longueur paillette 1 — jonc 31 reste compatible avec les possibilités de stockage dans les différents récipients disponibles actuellement sur le marché, la longueur totale de la paillette 1 est réduite comme indiqué ci-après.

Comme on l'a mentionné ci-dessus, le jonc-bouchon 3, 31 permet également un montage plus aisé de la paillette. En effet pour pouvoir monter dans la paillette 1 à la décongélation, la bulle 7 doit être de volume réduit : 20 μl pour les paillettes de 500 μl, 6-8 μl pour les paillettes de 250 μl. Le calibrage de la bulle 7 doit être effectué avec précision lors du montage de la paillette 1. Si l'on prélève un volume d'air légèrement inférieur, le risque de mélange des deux fractions existe et il faut recommencer l'opération. Le jonc de matière plastique 31 au cours de l'emboîtement à l'extrémité 14 de la paillette 1 comprime les fractions gazeuses au montage et leur volume diminue. Cette diminution de volume liée à la longueur du jonc 31 inséré dans la paillette 1 rend plus aisé le montage : l'opérateur peut prélever un volume plus important et contrôler à la fin des opérations le volume des fractions d'air ou mélange gazeux, en jouant sur la longueur du jonc 31 inséré dans la paillette 1.

L'emmanchement à force ou sertissage du jonc en matière plastique 31 dans la paillette 1 peut être éventuellement renforcé en soumettant la zone de jonction aux effets d'un sondage. Un tel procédé, par exemple, à l'aide d'une courte impulsion de soudage permet de parfaire la soudure des deux éléments en matière plastique afin de garantir l'inviolabilité de la paillette 1.

Selon la présente invention, on a réalisé des paillettes de diamètre interne de 2,8 mm (correspondant à celui des paillettes de 500 μl) et des paillettes de diamètre interne de 1,7 mm (correspondant à celui de paillettes de 250 μl).

On indique ci-après le rapport en volume et en longueur des éléments constitutifs pour une paillette de petit diamètre, savoir 250 μl.

| Fraction | Longueur en mm | Volume Approximatif en /ul |
|---|---|---|
| Embryon (4-4') | 5 | 12 |
| Mélange gazeux (5) | 10 | 24 |
| Bulle de gaz (7) entre l'embryon (4-4') et la solution (8) | 2,5 | 6 |
| Solution sucrose (8) | 25 | 55 |
| Milieu de culture (6) | 25 | 55 |
| Bulle d'air terminale (9) | 2,5 | 6 |
| Total paillette (1) sans bouchon (2) | 70  ∿ | 160 |
| Longueur totale paillette (1) sans jonc (31) | 87 | − |
| Longueur jonc (31) | 55 | − |
| Longueur totale | 142 | − |

La présente invention est applicable aux mammifères. Les meilleurs résultats ont été obtenus sur les embryons de bovins, d'ovins et de caprins. Toutefois, il importe de remarquer que la présente invention n'est pas limitée à l'application aux ovins, bovins et caprins.

La paillette 1 de la présente invention a été utilisée en transplantation embryonnaire. Les résultats obtenus sont les suivants :

Sur 30 embryons congelés, puis cultivés in vitro, 24 heures ou 48 heures après décongélation, 25 se sont normalement développés. Ce nombre représente un rendement de 83,3 %.

Sur 14 embryons congelés, puis transplantés directement après congélation, 7 gestations à 55 jours ont été obtenues avec des taux de survie de 50 %. Les techniques utilisées selon l'art antérieur ne permettaient qu'un taux de survie de 35 %.

La présente invention réside dans la structure particulière ci-dessus décrite de la paillette 1. Il est clair que la matière plastique constituant les parois 15 est une matière plastique habituellement utilisée dans les paillettes, selon la technique antérieure et ne rentre pas dans le cadre de la présente invention.

Enfin, il importe d'observer que la capacité de la paillette 1 de 500 µl peut varier et il est possible de réaliser des paillettes dont le volume peut être différent comme par exemple des paillettes de 250 µl.

La présente invention propose donc également une paillette munie d'un jonc d'identification pour la conservation par congélation d'embryons de mammifères, ledit jonc en matière plastique 31 permettant de réaliser une identification précise de l'embryon placé dans la paillette 1 et de calibrer à volonté la bulle de gaz 7 tout en rendant le montage de ladite paillette 1 plus aisé. Il convient de remarquer que le jonc 31 peut être réalisé en toute matière plastique compatible avec les fractions de la paillette 1. A titre d'exemple, ce jonc 31 est réalisé en polychlorure de vinyle, toutefois, il est bien entendu que toutes les matières similaires conviennent aussi. Les symboles d'identification sur le jonc 31 peuvent être réalisées selon toutes manières convenables, par exemple ces identifications peuvent être imprimées en utilisant une matrice en caoutchouc.

La différence de largeur entre le corps 32 du jonc 31 et le corps de la paillette 1 peut varier à volonté, cependant on préfère que le corps 32 du jonc 31 soit seulement légèrement supérieur au corps de la paillette 1.

**Revendications**

1. Paillette pour la conservation par congélation d'embryons de mammifères dans un milieu de conservation capable d'être congelé et décongelé et comprenant une substance cryoprotectrice (ou cryoprotecteur) (4) qui pénètre à l'intérieur des cellules de l'embryon (4'), ladite paillette (1) étant caractérisée en ce qu'elle est scellée à ses deux extrémités (13, 14) jusqu'au moment de l'utilisation dans le mammifère et en ce que l'embryon (4') dans le milieu de conservation par congélation, est entouré respectivement :

— d'une part, successivement en direction d'une extrémité (13), d'un mélange gazeux (5), d'un milieu de culture (6) et d'un premier bouchon extrême de scellement (2),

— et d'autre part, successivement en direction de l'autre extrémité (14) d'une bulle de gaz de volume réduit et calibré (7), d'une solution (8) d'au moins une substance miscible à l'eau, peu ou pas toxique à la température ambiante vis-à-vis de l'embryon (4') qui ne pénètre pas à l'intérieur des cellules de l'embryon (4') mais qui assure à l'extérieur de celui-ci une pression osmotique suffisante pour permettre une diffusion progressive du cryoprotecteur (4) à l'extérieur des cellules, la disposition étant telle que, à la décongélation, l'embryon (4') dans son milieu de conservation est mis directement en contact avec ladite solution (8), d'une autre bulle de gaz (9) et d'un deuxième bouchon extrême de scellement (3).

2. Paillette selon la revendication 1, caractérisée en ce que le mélange gazeux (5) est choisi parmi l'air, l'azote, des mélanges gazeux binaires ou ternaires.

3. Paillette selon l'une des revendications 1 ou 2, caractérisée en ce que le mélange gazeux (5) est constitué d'azote, d'oxygène et de dioxyde de carbone, notamment à raison de 90 % d'azote, de 5 % d'oxygène et 5 % de dioxyde de carbone.

4. Paillette selon l'une des revendications 1 à 3, caractérisée en ce que le milieu de culture (6) est un milieu de culture in vitro à tampon carbonate ou phosphate, par exemple à tampon carbonate, comprenant essentiellement du glucose, des sels minéraux et des acides aminés ou un milieu à tampon phosphate de type PBS.

5. Paillette selon l'une quelconque des revendications 1 à 4, caractérisée en ce que le cryoprotecteur (4) est le glycérol, le diméthylsulfoxyde ou le propanediol.

6. Paillette selon l'une quelconque des revendications 1 à 5, caractérisée en ce que la bulle de gaz (7) placée entre l'embryon (4') et la solution (8) est formée par l'air, l'azote ou les mélanges gazeux binaires ou ternaires.

7. Paillette selon l'une quelconque des revendications 1 à 6, caractérisée en ce que la solution (8) contient du sucrose et un tampon salin phosphate ou carbonate.

8. Paillette selon l'une quelconque des revendications 1 à 7, caractérisée en ce que la solution (8) contient de la polyvinylpyrrolidone et un tampon salin phosphate ou carbonate.

9. Paillette selon l'une quelconque des revendications 1 à 8, caractérisée en ce que la normalité du tampon salin de la solution (8) est fonction de la molarité de la substance qu'elle contient.

10. Paillette selon l'une quelconque des revendications 1 à 9, caractérisée en ce que plus la molarité de la substance augmente, plus la normalité du tampon diminue.

11. Paillette selon l'une quelconque des revendications 1 à 10, caractérisée en ce que la bulle de gaz (9) placée entre la solution (8) et le deuxième bouchon (3) est formée par l'air, l'azote ou des mélanges de gaz binaires ou ternaires.

12. Paillette selon l'une quelconque des revendications 1 à 11, caractérisée en ce qu'elle est congelée horizontalement.

13. Paillette selon l'une quelconque des revendications 1 à 12, caractérisée en ce que le rapport en volume des éléments constitutifs pour un volume global d'une paillette (1) de 500 $\mu$l se situe dans la gamme suivante :

| | |
|---|---|
| embryon (4') | 40 $\mu$l |
| mélange gazeux (5) | 50 $\mu$l |
| milieu de culture (6) | 150 $\mu$l |
| bulle de gaz (7) placée entre l'embryon (4') et la solution (8) | 20 $\mu$l |
| solution (8) | 200 $\mu$l |
| bulle de gaz (9) placée entre la solution (8) et le deuxième bouchon (3) | 40 $\mu$l |

14. Paillette selon l'une quelconque des revendications 1 à 13, caractérisée en ce que le deuxième bouchon extrême de scellement (3) est un jonc (31) en matière synthétique dont le corps (32) est plus large que celui de la paillette (1) et dont l'extrémité (34) dudit jonc (31) provoquant l'éclatement de la bulle (7) qui lors de la décongélation s'élève le long de la fraction du milieu assurant la dilution du cryoprotecteur, est emmanchée à force par au moins un méplat dans l'une des extrémités (14) de la paillette (1) après son remplissage à raison d'une longueur qui est choisie à volonté pour calibrer avec précision ladite bulle (7).

15. Paillette selon la revendication 14, caractérisée en ce que l'extrémité (34) du jonc (31) assurant l'éclatement de la bulle (7) présente une forme de calotte sphérique (34a).

16. Paillette selon la revendication 14, caractérisée en ce que l'extrémité (34) du jonc (31) assurant l'éclatement de la bulle (7) présente une forme de tronc de cône (34b).

17. Paillette selon la revendication 14, caractérisée en ce que l'extrémité (34) du jonc (31) assurant l'éclatement de la bulle (7) présente une forme de cône (34c).

18. Paillette selon l'une des revendications 15 ou 16, caractérisée en ce que la forme en tronc de cône (34b) ou de calotte sphérique (34a) de l'extrémité (34) du jonc (31) est surmontée d'une courte pointe (34d).

19. Paillette selon l'une quelconque des revendications 14 à 18, caractérisée en ce que le corps (32) du jonc (31) comporte des symboles nécessaires à l'identification de la paillette (1).

20. Paillette selon l'une quelconque des revendications 14 à 19, caractérisée en ce que le jonc (31) est en matière plastique injectée.

21. Paillette selon l'une quelconque des revendications 14 à 20, caractérisée en ce que le jonc (31) est en polychlorure de vinyle.

22. Paillette selon l'une quelconque des revendications 14 à 21, caractérisée en ce que l'emmanchement à force du jonc (31) est renforcé en soumettant la zone de jonction à une opération de soudage.

23. Paillette selon l'une quelconque des revendications 14 à 22, caractérisée en ce que les rapports en volume et longueur des éléments constitutifs pour un volume global d'une paillette de 250 μl, se situent dans la gamme suivante :

| Fraction | Longueur en mm | Volume approximatif en μl |
|---|---|---|
| Embryon (4-4') | 5 | 12 |
| Mélange gazeux (5) | 10 | 24 |
| Bulle de gaz (7) entre l'embryon (4-4') et la solution (8) | 2,5 | 6 |
| Solution sucrose (8) | 25 | 55 |
| Milieu de culture (6) | 25 | 55 |
| Bulle d'air terminale (9) | 2,5 | 6 |
| Total paillette (1) sans bouchon (2) | 70 | ~ 160 |
| Longueur totale paillette (1) sans jonc (31) | 87 | - |
| Longueur jonc (31) | 55 | - |
| Longueur totale | 142 | - |

**Claims**

1. Straw for preserving mammalian embryos by freezing them in a preservation medium capable of being frozen and thawed and containing a cryoprotective substance (or cryoprotector) (4) which penetrates inside the cells of the embryo (4'), the said straw (1) being characterised in that it is sealed at both ends (13, 14) up to the time of use in the mammal, and in that the embryo (4') in the medium for preservation by freezing is surrounded, respectively :

— on the one hand, successively in the direction of one end (13), by a gaseous mixture (5), a culture medium (6) and a first end sealing stopper (2),

— and on the other hand, successively in the direction of the other end (14), by a gas bubble of reduced, calibrated volume (7), by a solution (8) of at least one substance which is miscible with water and is of little or no toxicity towards the embryo (4') at the ambient temperature, which does not penetrate inside the cells of the embryo (4') but which provides outside the latter an osmotic pressure sufficient to enable gradual diffusion of the cryoprotector (4) to take place outside the cells, the arrangement being such that, on thawing, the embryo (4') in its preservation medium is brought directly into contact with the said solutions (8), by another gas bubble (9) and by a second end sealing stopper (3).

2. Straw according to Claim 1, characterised in that the gaseous mixture (5) is chosen from air, nitrogen or binary or ternary gaseous mixtures.

3. Straw according to one of Claims 1 and 2, characterised in that the gaseous mixture (5) consists of nitrogen, oxygen and carbon dioxide, in particular in the proportion of 90 % of nitrogen, 5 % of oxygen and 5 % of carbon dioxide.

4. Straw according to one of Claims 1 to 3, characterised in that the culture medium (6) is an in vitro culture medium having carbonate or phosphate buffer, for example carbonate buffer, mainly containing glucose, inorganic salts and amino acids or a phosphate buffer of the PBS type.

5. Straw according to any one of Claims 1 to 4, characterised in that the cryoprotector (4) is glycerol, dimethyl sulphoxide or propanediol.

6. Straw according to any one of claims 1 to 5, characterised in that the gas bubble (7) placed between the embryo (4') and the solution (8) consists of air, nitrogen or binary or ternary gaseous mixtures.

0 098 850

7. Straw according to any one of Claims 1 to 6, characterised in that the solution (8) contains sucrose and a phosphate or carbonate saline buffer.

8. Straw according to any one of Claims 1 to 7, characterised in that the solution (8) contains polyvinylpyrrolidone and a phosphate or carbonate saline buffer.

9. Straw according to any one of Claims 1 to 8, characterised in that the normality of the saline buffer in the solution (8) depends on the molarity of the substance which it contains.

10. Straw according to any one of Claims 1 to 9, characterised in that, the more the molarity of the substance increases, the more the normality of the buffer decreases.

11. Straw according to any one of Claims 1 to 10, characterised in that the gas bubble (9) placed between the solution (8) and the second stopper (3) consists of air, nitrogen or binary or ternary gaseous mixtures.

12. Straw according to any one of Claims 1 to 11, characterised in that it is frozen horizontally.

13. Straw according to any one of Claims 1 to 12, characterised in that the ratio by volume of the constituent components, for an overall volume of a straw (1) of 500 µl, is situated in the following range :

| | |
|---|---|
| embryo (4') | 40 µl |
| gaseous mixture (5) | 50 µl |
| culture medium (6) | 150 µl |
| gas bubble (7) placed between the embryo (4') and the solution (8) | 20 µl |
| solution (8) | 200 µl |
| gas bubble (9) placed between the solution (8) and the second stopper (3) | 40 µl |

14. Straw according to any one of Claims 1 to 13, characterised in that the second end sealing stopper (3) is a rod (31) of synthetic material, the body (32) of which is broader than that of the straw (1) and the end (34) of which, which causes bursting of the bubble (7) which rises during thawing along the fraction of the medium, providing for dilution of the cryoprotector, is force fitted, by means of at least one flat, into one of the ends (14) of the straw (1) after the latter is filled, the extent of insertion being chosen at will to calibrate precisely the said bubble (7).

15. Straw according to Claim 14, characterised in that the end (34) of the rod (31) providing for bursting of the bubble (7) has the shape of a spherical cap (34a).

16. Straw according to Claim 14, characterised in that the end (34) of the rod (31) providing for the bursting of the bubble (7) has the shape of a truncated cone (34b).

17. Straw according to Claim 14, characterised in that the end (34) of the rod (31) providing for bursting of the bubble (7) is conical in shape (34c).

18. Straw according to one of Claims 15 and 16, characterised in that the truncated cone (34b) or spherical cap (34a) shape of the end (34) of the rod (31) is surmounted by a short point (34d).

19. Straw according to any one of Claims 14 to 18, characterised in that the body (32) of the rod (31) incorporates symbols required for the identification of the Straw (1).

20. Straw according to any one of Claims 14 to 19, characterised in that the rod (31) is made of injected plastic.

21. Straw according to any one of Claims 14 to 20, characterised in that the rod (31) is made of polyvinyl chloride.

22. Straw according to any one of Claims 14 to 21, characterised in that the force fitting of the rod (31) is strengthened by subjecting the junction zone to a welding operation.

23. Straw according to any one of Claims 14 to 22, characterised in that the ratios by volume and length of the constituent components for an overall volume of a straw of 250 µl are situated in the following range :

| | Length in mm | Approx. volume in µl |
|---|---|---|
| Embryo (4-4') | 5 | 12 |
| Gaseous mixture (5) | 10 | 24 |
| Gas bubble (7) between the embryo (4-4') and the solution (8) | 2.5 | 6 |
| Sucrose solution (8) | 25 | 55 |
| Culture medium (6) | 25 | 55 |

9

**0 098 850**

(Continuation)

| | Length in mm | Approx. volume in $\mu l$ |
|---|---|---|
| Terminal air bubble (9) | 2.5 | 6 |
| Total straw = (1) without stopper (2) | 70 ≃ | 160 |
| Total length straw (1) without rod (31) | 87 | - |
| Rod length (31) | 55 | - |
| Total length | 142 | - |

**Patentansprüche**

1. Paillette (Röhrchen) zum Aufbewahren von Säugerembryonen durch Gefrieren in einem Aufbewahrungsmilieu, tauglich zum Einfrieren und Auftauen, und enthaltend eine Kälteschutzsubstanz (4), die in das Innere der Zellen des Embryos (4') dringt, wobei die Paillette (1) dadurch gekennzeichnet ist, daß sie an beiden äußeren Enden (13, 14) bis zum Moment der Verwendung im Säuger versiegelt ist, und der Embryo (4') in dem Aufbewahrungsmilieu durch Gefrieren beiderseitig umgeben ist durch :
— einerseits, der Reihenfolge nach in Richtung des Endes (13), von einem Gasgemisch (5), einem Kulturmilieu (6) und einen extrem verschließenden Stopfen (2),
— und andererseits, der Reihenfolge nach in Richtung des anderen Endes (14), von einer Gasblase mit reduziertem und kalibriertem Volumen (7), von einer Lösung (8) wenigstens einer mit Wasser mischbaren, bei Umgebungstemperatur gegenüber dem Embryo (4') wenig oder nicht toxischen Substanz, die nicht in das Innere der Zellen des Embryos (4') eindringt, sondern an der Außenseite derselben einen ausreichenden osmotischen Druck sicherstellt, um eine ausreichende Diffusion des Kälteschutzes (4) zum Äußeren der Zellen zu erlauben, wobei die Anordnung so ist, daß beim Auftauen der Embryo (4') in seinem Konservierungsmilieu in direkten Kontakt mit der Lösung (8) gebracht wird, von einer weiteren Gasblase (9) und von einem zweiten, extrem versiegelnden Stopfen (3).

2. Paillette gemäß Anspruch 1, dadurch gekennzeichnet, daß das Gasgemisch (5) ausgewählt ist auf Luft, Stickstoff und binären oder ternären Gasgemischen.

3. Paillette gemäß Ansprüchen 1 oder 2, dadurch gekennzeichnet, daß das Gasgemisch (5) gebildet wird aus Stickstoff, Sauerstoff und Kohlendioxid, insbesondere aus 90 % Stickstoff, 5 % Sauerstoff und 5 Kohlendioxid.

4. Paillette gemäß einem der Ansprüche 1 bis 3, dadurch gekennzeichnet, daß das Kulturmilieu (6) ein Kulturmilieu eines in vitro Carbonat- oder Phosphatpuffers, z. B. eines Carbonatpuffers, enthaltend im wesentlichen Glucose, Mineralsalze und Aminosäuren oder ein Phosphatpuffer von Typ PBS ist.

5. Paillette gemäß irgendeinem der Ansprüche 1 bis 4, dadurch gekennzeichnet, daß das Kälteschutzmittel (4) Glycerin, Dimethylsulfoxid oder Propandiol ist.

6. Paillette gemäß irgendeinem der Ansprüche 1 bis 5, dadurch gekennzeichnet, daß die Gasblase (7), befindlich zwischen dem Embryo (4') und der Lösung (8), aus Luft, Stickstoff oder binären oder ternären Gemischen besteht.

7. Paillette gemäß irgendeinem der Ansprüche 1 bis 6, dadurch gekennzeichnet, daß die Lösung (8) Zucker und einen salzhaltigen Phosphat- oder Carbonatpuffer enthält.

8. Paillette gemäß irgendeinem der Ansprüche 1 bis 7, dadurch gekennzeichnet, daß die Lösung (8) Polyvinylpyrrolidon und einen Phosphat- oder Carbonatsalzpuffer enthält.

9. Paillette gemäß irgendeinem der Ansprüche 1 bis 8, dadurch gekennzeichnet, daß die Normalität des Salzpuffers der Lösung (8) eine Funktion der Molarität der sie enthaltenden Substanz ist.

10. Paillette gemäß irgendeinem der Ansprüche 1 bis 9, dadurch gekennzeichnet, daß, je mehr sich die Molarität der Substanz vergrößert, die Normalität des Puffers abnimmt.

11. Paillette gemäß irgendeinem der Ansprüche 1 bis 10, dadurch gekennzeichnet, daß die Gasblase (9), befindlich zwischen der Lösung (8) und dem zweiten Stopfen (3), aus Luft, Stickstoff oder binären oder ternären Gasgemischen gebildet ist.

12. Paillette gemäß irgendeinem der Ansprüche 1 bis 11, dadurch gekennzeichnet, daß sie horizontal eingefroren wird.

13. Paillette gemäß irgendeinem der Ansprüche 1 bis 12, dadurch gekennzeichnet, daß der Volumeninhalt der wesentlichen Elemente für ein Gesamtvolumen der Paillette (1) von 500 $\mu l$ sich im folgenden Bereich befindet :

10

| | |
|---|---|
| Embryo (4') | 40 µl |
| Gasgemisch (5) | 50 µl |
| Kulturmilieu (6) | 150 µl |
| Gasblase (7), befindlich zwischen Embryo (4') und der Lösung (8) | 20 µl |
| Lösung (8) | 200 µl |
| Gasblase (9), befindlich zwischen der Lösung (8) und dem zweiten Stopfen (3) | 40 µl |

14. Paillette gemäß irgeneinem der Ansprüche 1 bis 13, dadurch gekennzeichnet, daß der zweite extrem versiegelnde Stopfen (3) ein Rohr (31) aus synthetischem Material ist, dessen Körper (32) größer ist als derjenige der paillette (1) und wobei das Ende (34) des Rohres (31) das Bersten der Blase (7) hervorruft, die sich während des Auftauens entlang der Fraktion des Milieus erstreckt, das die Verdünnung des Kälteschutzmittels sicherstellt, und zur Verstärkung mit wenigstens einer Halbfläche an einem der Enden (14) der Paillette (1) nach der Füllung in einer Länge, die frei gewählt ist, um die Blase (7) zu kalibrieren bestückt ist.

15. Paillette gemäß Anspruch 14, dadurch gekennzeichnet, daß das Ende (34) des Rohres (31), das das Bersten der Blase (7) sicherstellt, eine sphärische Kalotte (34a) darstellt.

16. Paillette gemäß Anspruch 14, dadurch gekennzeichnet, daß das Ende (34) des Rohres (31), das das Bersten der Gasblase (7) sicherstellt, einen Kegelstumpf (34b) darstellt.

17. Paillette gemäß Anspruch 14, dadurch gekennzeichnet, daß das Ende (34) des Rohres (31), das das Bersten der Blase (7) sicherstellt, eine konische Form (34c) darstellt.

18. Paillette gemäß Anspruch 15 oder 16, dadurch gekennzeichnet, daß der Kegelstumpf (34b) oder die sphärische Kalotte (34a) des Endes (34) des Rohres (31) eine kurze Spitze (34d), die sie überragt, aufweist.

19. Paillette gemäß irgendeinem der Ansprüche 14 bis 18, dadurch gekennzeichnet, daß der Körper (32) des Rohres (31) für die Identifikation der Paillette (1) notwendige Symbole aufweist.

20. Paillette gemäß irgendeinem der Ansprüche 14 bis 19, dadurch gekennzeichnet, daß das Rohr (31) aus Spritzgußkunstoff besteht.

21. Paillette gemäß irgendeinem der Ansprüche 14 bis 20, dadurch gekennzeichnet, daß das Rohr (31) aus Polyvinylchlorid besteht.

22. Paillette gemäß irgendeinem der Ansprüche 14 bis 21, dadurch gekennzeichnet, daß der Stiel des Rohres (31) verstärkt ist, indem die Verbindungszone verschweißt wird.

23. Paillette gemäß irgendeinem der Ansprüche 14 bis 22, dadurch gekennzeichnet, daß der Volumeninhalt und die länge der wesentlichen Elemente für ein Gesamtvolumen der Paillette von 250 µl sich im folgenden Bereich befinden :

| Teil | Länge in mm | ungefähres Volumen in µl |
|---|---|---|
| Embryo (4-4') | 5 | 12 |
| Gasgemisch (5) | 10 | 24 |
| Gasblase (7) zwischen Embryo (4-4') und der Lösung (8) | 2,5 | 6 |
| Zuckerlösung (8) | 25 | 55 |
| Kulturmilieu (6) | 25 | 55 |
| Endständige Luftblase (9) | 2,5 | 6 |
| gesamte Paillette (1), ohne Stopfen (2) | 70 ≃ | 160 |
| Gesamtlänge der Paillette (1), ohne Rohr (31) | 87 | – |
| Rohrlänge (31) | 55 | – |
| Gesamtlänge | 142 | – |

0 098 850

FIG.1

FIG.2

**FIG.3**

**FIG.4**

**FIG.5**

**FIG.6**